# EUROPEAN PATENT APPLICATION

(11) **EP 4 293 000 A1**
(43) Date of publication of application: **20.12.2023**
(21) Application number: 22179342.5
(22) Date of filing: 16.06.2022
(51) Int. Cl.: C05C 1/00, C05C 3/00, C05C 9/00, C05D 9/02, C05G 1/00, C05G 3/00, C05G 5/10, C05F 11/02

(54) **METHOD FOR THE MANUFACTURE OF A SOLID, PARTICULATE FERTILIZER COMPOSITION COMPRISING AN ADDITIVE**

(71) Applicant: Yara International ASA, 0277 Oslo (NO)
(72) Inventor: van Belzen, Ruud, 4541 HJ Terneuzen (NL); Colpaert, Filip, 9052 Zwijnaarde (BE)
(74) Representative: De Clercq & Partners

(57) **Abstract**

The present disclosure relates to a method for the manufacture of a solid, particulate, fertilizer composition comprising a nitrogen source selected from the group consisting of urea, and ammonium salts, and an additive selected from the group consisting of biostimulants and micronutrients, in a production plant comprising at least a synthesis unit, an evaporator unit, a particulation unit, an effluent gas treatment unit comprising a scrubber, and optionally a scrubber evaporator.

## Description

### FIELD OF THE INVENTION

This invention relates to a method for the manufacture of a solid, particulate, fertilizer composition comprising a primary nutrient, an additive, in particular a biostimulant, and/or a micronutrient.

### BACKGROUND OF THE INVENTION

Cultivated crops require 12 nutrients to ensure optimal growth and yield. These nutrients are classified in three categories: the primary nutrients are nitrogen, phosphorus, and potassium; the secondary nutrients are magnesium, calcium and sulphur; and the micronutrients are boron, copper, iron, molybdenum, manganese and zinc.

These nutrients are naturally found in most soils, but not always in the concentration required by the crops, so it is common practice to apply fertilizer products to a field to ensure that the crop has access to enough nutrients.

There are two main categories of fertilizer products: solids, and liquids. Solid fertilizer products are generally favoured by farmers because they are easier to distribute, and are cheaper than liquids.

Solid fertilizer composition may contain one or more nutrients. For example, urea prills or granules only contain nitrogen, but the so-called NPK products contain all the three primary nutrients. It is becoming more common for solid fertilizer compositions to contain at least one primary nutrient and one or more secondary nutrient and/or one or more micronutrient. These products reduce the number of operations required by the farmers.

In addition to nutrients, the use of a new class of products is increasing: biostimulants. Biostimulants are chemical compounds that may be small organic molecules, inorganic salts, polymers, but also microbes, fungi, or plant extract. Biostimulants are not used by crops for the chemical elements comprised therein, but they trigger a physiological response in the crop. The response may reduce damages to the crop due to abiotic stress, such as disease or drought, it may improve the way that crops absorb or use the nutrients from the soils, or it may increase the quantity or quality of the harvest. So, it is becoming more interesting to produce solid, fertilizer compositions containing one or more biostimulant.

Solid, fertilizer compositions can be prepared in a number of ways. A method broadly used today in the industry involves the preparation of a melt, i.e. a liquid composition containing salts or small molecules and water, and the solidification of the melt, into a solid, particulate composition. This method allows a continuous and high production of solid, fertilizer compositions that can be stored, and easily transported to the farms.

A conventional way of adding additives, such as biostimulants and micronutrients, is to add these into the melt, either during the concentration of the melt, i.e. when the melt typically comprises more than 5 weight% of water, or just before the solidification step.

### SUMMARY OF THE INVENTION

The conventional method mentioned above is not always suitable, since it may require additional equipment, so there is a need to provide a new method to produce, solid, particulate fertilizer compositions comprising additives, such as biostimulants and micronutrients.

The inventors have now addressed the abovementioned problems, and found that an additive, such as one selected from the group consisting of biostimulants and micronutrients, can be added to a fertilizer melt in a precise dose using different addition points in the process for the production of solid, particulate, fertilizer composition, wherein the additive is introduced into the fertilizer composition as an aqueous suspension of particulate solid material, as a solution of the additive, such as an aqueous solution or a solution in an organic solvent, as an aqueous dispersion or as a solid.

The use of water as a suspension, solvent or dispersion medium, and the addition of water to a melt that already contains water, does not impact the quality of the final solid, particulate composition. Moreover, the process for the production of solid, particulate, fertilizer composition already contains process steps and measures to remove water from a melt, thus effectively removing the solvent, suspension or dispersion medium (i.e. water). Hence, no alien substances other than the intended additives remain in the final ammonium-based product.

Adding the additive as a solid reduces the need for removing additional water from the melt, and thus reduces the cost of the manufacturing method.

In one aspect, the present disclosure relates to a method for the manufacture of a solid, particulate, fertilizer composition comprising a nitrogen source selected from the group consisting of urea, and ammonium salts, and an additive selected from the group consisting of biostimulants and micronutrients, in a production plant comprising at least a synthesis unit, an evaporator unit, a particulation unit, an effluent gas treatment unit comprising a scrubber, and optionally a scrubber evaporator, wherein the method comprises at least the steps of :
(i) in the synthesis unit, producing an aqueous solution comprising a nitrogen source selected from the group consisting of urea, and ammonium salts, and water;
(ii) in the evaporator unit, concentrating the aqueous solution produced in step (i), thereby obtaining a fertilizer melt comprising from 1.0 to 5.0 weight% of water;
(iii) in the particulation unit, particulating the melt obtained in step (ii), there-by obtaining a solid, particulate, fertilizer composition, and producing an effluent gas comprising ammonia gas;
(iv) in the effluent gas treatment unit, treating the effluent gas from the particulation unit comprising ammonia gas with an aqueous solution, thereby producing a scrubber solution; and
(v) optionally, in the scrubber evaporator, concentrating the scrubber solution from the scrubber solution storage container,
(vi) optionally, in the scrubber solution storage container, storing the scrubber solution from the effluent gas treatment unit produced in step (iii) or the concentrated scrubber solution from the scrubber evaporator;
(vii) mixing the scrubber solution obtained in step (iv) or (v) with the aqueous solution in the synthesis unit in step (i), with the aqueous solution in the evaporator unit in step (ii), or with the fertilizer melt obtained in step (ii); wherein the additive is introduced as an aqueous suspension, an aqueous dispersion, a solution, or a solid, in any one or more of:
   (a) the effluent gas treatment unit;
   (b) the scrubber solution storage container containing the scrubber solution.

In a further aspect, the present disclosure relates to a system for the manufacture of a solid, particulate, fertilizer composition, wherein said system is configured for manufacturing of a solid, particulate, fertilizer composition according to the method as described herein, characterized in that the system comprises additive introduction means in the effluent gas treatment unit and/or the scrubber solution storage container.

### Figures

Figure 1 represents the workflow of a method according to the present disclosure.
Figure 2 represents the workflow of a method according to the present disclosure.

### DETAILED DESCRIPTION OF THE INVENTION

Within the context of this disclosure, the expression "weight percent", "%wt" or "weight%", here and throughout the description unless otherwise defined, refers to the relative weight of the respective component based on the overall weight of the formulation.

"A", "an", and "the" as used herein refers to both singular and plural referents unless the context clearly dictates otherwise. By way of example, "an additive" refers to one or more than one additive.

Within the context of this disclosure, with a particulate form is meant a physical form that can also be designated as granulated, prilled, crystalline, compacted, powdered, and the like, wherein the respective compound is in a small unit form.

Within the context of this disclosure, with stabilizer is meant a compound which is able to improve the chemical stability of the nitrification inhibitor.

Within the context of this disclosure, with aqueous suspension is meant any composition wherein the additive is at least suspended as a particulate solid in water. Examples are calcium oxide in water or magnesium sulphate in water. The suspension may contain suspension stabilizers, wetting agents, surface-active compounds and the like.

Within the context of this disclosure, with aqueous dispersion is meant any composition wherein the additive is an at least partly water-immiscible liquid that is intimately mixed with water, wherein either the water or the at least partly water-immiscible liquid is the continuous phase.

Within the context of this disclosure, with aqueous solution is meant any composition wherein the additive is substantially dissolved in water. The aqueous solution may comprise other components, such as co-solvents to improve the solubility of the additive.

Within the context of this disclosure, a solid, homogeneous particle refers to a solid particle that is uniform with respect to its composition throughout the particle. An homogeneous particle may still comprise solid particles of its different components as long as the solid particles are considerably smaller than the homogeneous solid particles. In contrast, a heterogeneous particle varies in its composition throughout the particle. Notably, homogeneous particles are easier to produce because they require a single solidification step.

In one aspect, the present disclosure relates to a method for the manufacture of a solid, particulate, fertilizer composition com-prising a nitrogen source selected from the group consisting of urea, and ammonium salts, and an additive selected from the group consisting of biostimulants and micronutrients, in a production plant comprising at least a synthesis unit, an evaporator unit, a particulation unit, an effluent gas treatment unit comprising a scrubber, and optionally a scrubber evaporator, wherein the method comprises at least the steps of :
(i) in the synthesis unit, producing an aqueous solution comprising a nitrogen source selected from the group consisting of urea, and ammonium salts, and water;
(ii) in the evaporator unit, concentrating the aqueous solution produced in step (i), thereby obtaining a fertilizer melt comprising from 1.0 to 5.0 weight% of water;
(iii) in the particulation unit, particulating the melt obtained in step (ii), there-by obtaining a solid, particulate, fertilizer composition, and producing an effluent gas comprising ammonia gas;
(iv) in the effluent gas treatment unit, treating the effluent gas from the particulation unit comprising ammonia gas with an aqueous solution, thereby producing a scrubber solution; and
(v) optionally, in the scrubber evaporator, concentrating the scrubber solution from the scrubber solution storage container,
(vi) optionally, in the scrubber solution storage container, storing the scrubber solution from the effluent gas treatment unit produced in step (iii) or the concentrated scrubber solution from the scrubber evaporator;
(vii) mixing the scrubber solution obtained in step (iv) or (v) with the aqueous solution in the synthesis unit in step (i), with the aqueous solution in the evaporator unit in step (ii), or with the fertilizer melt obtained in step (ii); wherein the additive is introduced as an aqueous suspension, an aqueous dispersion, a solution, or a solid, in any one or more of:
   (a) the effluent gas treatment unit;
   (b) the scrubber solution storage container containing the scrubber solution.

First, an aqueous solution comprising a nitrogen source selected from the group consisting of urea, and ammonium salts, is produced in the synthesis unit. The synthesis unit of a plant comprises various equipment necessary for transforming raw materials in an aqueous solution.

There are different methods known in the field to prepare such aqueous solution. A conventional method involves reacting a stream of ammonia, gaseous or liquid, with an acid, such as nitric acid, phosphoric acid, or sulphuric acid. This reaction produces a composition comprising an ammonium melt and water. The composition may comprise at least 20 weight% of water.

A fertilizer comprising urea can be obtained by reacting streams of ammonia and carbon dioxide in a urea reactor. Such reaction yields an aqueous solution comprising urea, ammonium carbamate, free ammonia and water. The ammonium carbamate and ammonia may be subsequently removed to provide an aqueous solution comprising urea.

An aqueous solution comprising urea or an ammonium salts may also be obtained by dissolving in water solid products comprising urea and/or an ammonium salt.

In one embodiment, the aqueous solution produced in step i) comprises at least 5 weight% of water. In one embodiment, the aqueous solution produced in step i) comprises from 5 to 50 weight%, such as from 10 to 50, from 15 to 50, from 20 to 50, from 10 to 40, or from 15 to 40 weight% of water.

The aqueous solution may then be concentrated in an evaporator unit to remove some of the water comprised therein water. The evaporator unit may comprise one or more apparatus, for example an evaporator or a heat exchanger, designed to heat up a composition and remove water from it. In the evaporator unit, the water content of the aqueous solution is brought down to from 1.0 to 5.0 weight%. The exact water content of the melt after the evaporator unit is dictated by the particulating method chosen for the process. Different particulation methods require melts with different water contents.

Optionally, additional components may be added to the melt before the melt is particulated. This addition may be performed in a mixing unit, where the additional components are added to the melt and mixed to obtain an homogeneous melt. The additional components may be soluble or not in the melt. An homogeneous melt is not limited to a melt only comprising soluble components, but a melt comprising insoluble components well distributed within the melt is considered homogeneous within this disclosure. For example, to produce an ammonium nitrate-based solid, particulate composition for fertilizer use, it is well known to add an inorganic filler to reduce the explosive risk of the solid, particulate composition. The inorganic filler may be selected from the group of limestone, dolomite, gypsum, kaolin clays or mixtures thereof.

Once the fertilizer melt comprises all the required components, it is sent to the particulation unit to turn the melt into a solid, particulate, fertilizer composition. A variety of particulating methods are known in the field, and produce particles with different properties. The choice of particulating method may be dictated by the product requirements or type of melt. The particulation unit may comprise a fluidized bed, a pan granulator, a drum granulator, a prilling tower, a spherodizer, a pugmill, a spray dryer, a high intensity mixer, or a pastillizer. These particulation devices can granulate a melt composition into an homogeneous, solid, particulate composition, either by action of accretion (fluidized bed) or agglomeration.

The particulating unit may also comprise a cooling unit. Particles formed from a melt have a high temperature, often above 60 °C. To facilitate its handling and storage, it may be an advantage to cool down the particles a little bit, for example below 40 °C. This is often done by introducing a stream of gas, for example air, into a compartment containing the hot particles, wherein the gas has a lower temperature than the particles.

In many fertilizer-producing plants, the particulating unit requires the use of a stream of gas, often a stream of air, to cool the melt and help form the solid particles. In the particulating unit, the stream of gas becomes polluted with contaminants, solid or fluid, in particular ammonia gas. In most countries, this gas stream cannot be released in the atmosphere before the contaminants are removed from it, or at least the level of the contaminants must be below a certain threshold. So, the production plant may comprise an effluent gas treatment unit to remove at least some pollutants from the gas stream before it is released in the atmosphere. The most common apparatus in such a unit is a scrubber.

A scrubber is a device comprising an air inlet and an air outlet for the gas stream from the particulating unit to be injected and collected. It also comprises devices to capture contaminants from the gas stream. A common device in scrubber are scrubbing pads on which a liquid composition, for example an aqueous solution is sprayed onto. The contaminants, solid or fluid, are absorbed by the water, which is collected onto the pads. The liquid composition from all the pads is collected into a single stream to form a scrubber solution. This scrubber solution may be stored in a scrubber solution storage unit.

Since the scrubber solution comprise elements from the product to be made, such as ammonia, it may be interesting to re-inject this solution back into the production process to save raw materials. The scrubber solution may be re-injected as it is collected from the pads, but it may also be concentrated, for example in a scrubber evaporator, to increase the concentration of the useful components and avoid re-injecting too much water, which will have to be evaporated eventually, in the production process. However, since the production process already contain stages where a composition is heated up to remove water, such as the evaporator of step (ii), it may not be necessary to install a second evaporator in the process.

Once the desired scrubber solution is obtained, concentrated or not, it may be added in the production process, upstream, i.e. before, of the particulation stage. For example, the scrubber solution may be added to the synthesis unit, to the aqueous solution before it enters the evaporator unit of step (i), or to the melt before the particulating step.

In one embodiment, the method is performed in a production plant comprising an evaporator unit, a particulation unit, and an effluent gas treatment unit comprising a scrubber, and a scrubber solution storage container.

In one embodiment, the method is performed in a production plant comprising an evaporator unit, a mixing unit, a particulation unit, and an effluent gas treatment unit comprising a scrubber, and a scrubber solution storage container.

In one embodiment, the method is performed in a production plant comprising an evaporator unit, a mixing unit, a particulation unit, and an effluent gas treatment unit comprising a scrubber, a scrubber solution storage container, and a scrubber evaporator.

According to the present disclosure, the additive is introduced as an aqueous suspension, an aqueous dispersion, a solution, or a solid, in any one or more of:
(a) the effluent gas treatment unit;
(b) the scrubber solution storage container containing the scrubber solution.

It was found that it may be an advantage to introduce a biostimulant and/or a micronutrient in the effluent gas treatment unit or the scrubber solution storage container containing the scrubber solution.

The effluent gas treatment unit comprises a scrubber using an aqueous solution to capture the pollutants comprised in the gas stream from the particulating unit. The additive may be added to the aqueous solution used by the scrubber either before the aqueous solution enters the scrubber, or after the scrubber.

Surprisingly, it was found very easy and efficient to add the additive as an aqueous suspension to the water supply used in the effluent gas treatment unit. The additive may be added to a tank storing the water used in the scrubber. Alternatively, it may be added directly to the stream of water before it enters the scrubber via means known in the field.

The additive may also be added to the scrubber solution storage container containing the scrubber solution. If the additive has a low solubility in water, it may be an advantage to add it in the scrubber solution storage container, as the container may hold a large volume of aqueous solution.

The scrubber solution may be transported to the scrubber evaporator, where the bulk of the water is removed, or it may be directly introduced into the production process. The scrubber solution, concentrated or not, may be added to the evaporation unit where it mixes with the melt and the water is evaporated. This allows the process to control effectively the water content of the melt to be particulated. Alternatively, the scrubber solution may be added to the mixing unit, if present, where it is mixed in with the highly concentrated fertilizer melt.

The selection of the method of addition of an additive, i.e. as an aqueous suspension, solution or dispersion, may depend on the identity of the additive. Some may be easily dissolved in water and, as such, may be added to the method as an aqueous solution. Other additives with a poor water solubility may have to be added as a suspension or dispersion.

Similarly, the step wherein the additive is added may be guided or imposed by different factors, such as the exact nature of the additive, its stability towards temperature and/or some chemical environment.

In one embodiment, the additive comprises a biostimulant selected from the group consisting of seaweed extracts, plant extracts, enzymatic extracts, humic acids, fulvic acids, phosphites, chitosan, plant growth hormones, microbes, and protein hydrolysates. A variety of natural substances or microorganisms has been proved so far to have some biostimulant activity on one or more crops. The choice of biostimulant used in the present method may depend on the type of crops that is configured to receive the fertilizer composition and the problem to be solved in the crop.

In one embodiment, the solid, particulate, fertilizer composition obtained in step (iii) comprises from 0.0001 to 2.0 weight%, in particular from 0.01 to 1.0 weight%, more in particular from 0.05 to 0.5 weight% of the additive relative to the total weight of the solid, particulate, fertilizer composition. Both biostimulants and micronutrients are required in small amounts by crops to achieve the desired effect.

In one embodiment, the additive comprises a seaweed extract, the seaweed being a species selected from the group consisting of *Kappaphycus alvarezii, Ascophyllum Nodosum, Ecklonia maxima, Durvillea potatorum, Macrocystis pyrifera, Sargassum, Laminaria digitata* and mixtures thereof. The extract of several seaweed species has been shown to be suitable for use as biostimulant.

In one embodiment, the solid, particulate, fertilizer composition obtained in step (iii) comprises from 40 to 80 weight%, from 45 to 80 weight%, from 50 to 80 weight%, from 55 to 80 weight%, from 40 to 75 weight%, or from 40 to 70 weight% of an ammonium salt selected from the group consisting of ammonium nitrate, ammonium sulphate, ammonium phosphate, and mixtures thereof. Ammonium ions are a source of nitrogen for crops. Ammonium ions are not well absorbed by the roots of crops, but ammonium ions are slowly converted into nitrate ions by bacteria present in the soil, or on or in the roots of crops. Nitrates are easily absorbed by crops, and are the preferred nitrogen source for crops. Ammonium nitrate is a very concentrated source of nitrogen. Ammonium sulphate is a source of nitrogen and sulphur. Ammonium phosphate salts are a source of nitrogen and phosphorus. Ammonium phosphate salts may comprise monoammonium phosphate (MAP) and/or diammonium phosphate (DAP).

In one embodiment, the solid, particulate, fertilizer composition obtained in step (iii) comprises from 40 to 99 weight%, from 45 to 99 weight%, from 50 to 99 weight%, from 60 to 99 weight%, from 40 to 95 weight%, or from 40 to 90 weight% of urea. Urea is a very concentrated source of nitrogen (46% of nitrogen by weight).

In one embodiment, the solid, particulate, fertilizer composition obtained in step (iii) comprises one or more compounds selected from the group consisting of calcium nitrate, sodium nitrate, calcium bis(dihydrogen- orthophosphate), super phosphate, triple superphosphate, rock phosphate, potassium sulphate, potassium magnesium sulphate, urea, potassium chloride (MOP), potassium phosphate (SOP), urea potassium salts (UK), elemental sulphur, and mixtures thereof.

In one embodiment, the additive comprises a micronutrient selected from the group consisting of boron, copper, iron, molybdenum, manganese, zinc and mixtures thereof. Micronutrient are used by crops at different stages of the growing process and are required in different amounts by different crops.

In principle, the additive is suitably introduced into the fertilizer composition as an aqueous suspension, an aqueous dispersion, a solution, such as an aqueous solution or a solution in an organic solvent, or a solid. However, depending on the specific equipment, one or more of the above may be preferred.

Adding an additive as a solid may be the preferred option, in particular if the additive is free-flowing and non-dusting.

If the additive is very viscous at atmospheric pressure and ambient temperature, it may be an advantage to add it to the method as a solution or suspension.

In one embodiment, the additive is added as a solid to the scrubber solution obtained in step (iv) and added in the synthesis unit in step (i).

In one embodiment, the additive is added as a solid to the scrubber solution obtained in step (iv) and mixed with the aqueous solution in the evaporator unit in step (ii).

In one embodiment, the additive is added as a solid to the scrubber solution obtained in step (iv) and mixed with the fertilizer melt obtained in step (ii).

In one embodiment, the additive is added as an aqueous solution to the scrubber solution obtained in step (iv) and added in the synthesis unit in step (i).

In one embodiment, the additive is added as an aqueous solution to the scrubber solution obtained in step (iv) and mixed with the aqueous solution in the evaporator unit in step (ii).

In one embodiment, the additive is added as an aqueous solution to the scrubber solution obtained in step (iv) and mixed with the fertilizer melt obtained in step (ii).

In one embodiment, the additive is added as a solid to the scrubber solution obtained in step iv) and added in the synthesis unit in step (i).

In one embodiment, the additive is added as a solid to the scrubber solution obtained in step (v) and mixed with the aqueous solution in the evaporator unit in step (ii).

In one embodiment, the additive is added as a solid to the scrubber solution obtained in step (v) and mixed with the fertilizer melt obtained in step (ii).

In one embodiment, the additive is added as an aqueous solution to the scrubber solution obtained in step (v) and added in the synthesis unit in step (i).

In one embodiment, the additive is added as an aqueous solution to the scrubber solution obtained in step (v) and mixed with the aqueous solution in the evaporator unit in step (ii).

In one embodiment, the additive is added as an aqueous solution to the scrubber solution obtained in step (v) and mixed with the fertilizer melt obtained in step (ii).

In one embodiment, the production plant comprises a mixing unit, in particular a mixing unit configured to receive a fertilizer melt from the evaporator unit, and to provide a fertilize to the particulating unit. In one embodiment, the additive is added as an aqueous solution, an aqueous suspension or a solid to a fertilizer melt in the mixing unit. The mixing unit, if present in the production plant, is an interesting location to add the scrubber solution to the fertilizer composition location as the mixing unit comprises addition and mixing means that are designed to mix in additives or other compounds into the fertilizer melt.

In one embodiment, the method comprises the further step of applying a conditioning agent to the solid, particulate, fertilizer composition. The conditioning agent may be applied as a coating layer, in particular a coating layer comprising a wax, in particular a petroleum wax or a paraffin wax, and an alkyl phosphate ester. It is well known to apply a conditioning agent, for example, in the form of a coating layer, to solid, particulate compositions, to further improve their properties. Hygroscopicity, dustiness are characteristics that may be improved by the addition of such agents. For example, ammonium nitrate-based composition are quite hydroscopic, so it may be an advantage to apply a coating layer that is able to slow down the ate of water absorption by the composition. In particular, it was found that a coating layer comprising a wax, in particular a petroleum wax or a paraffin wax, and an alkyl phosphate ester was beneficial to ammonium nitrate-based compositions.

In some embodiments, the conditioning agent comprises a micronutrient selected from the group consisting of boron, manganese, molybdenum, iron, copper and zinc and/or a biostimulant.

In one embodiment, the average particle size (dp50) of the solid, particulate, fertilizer composition obtained by the present method is between 1.0 mm and 5.0 cm, preferably between 1.0 mm and 1.0 cm, preferably between 1.0 and 6.0 mm, preferably between 2.0 and 4.0 mm, preferably between 3.0 and 5.0 mm, preferably between 2.5 and 3.6 mm, as determined by mesh sieve screening.

In a further aspect, the present disclosure relates to a system for the manufacture of a solid, particulate, fertilizer composition as disclosed herein, wherein said system is configured for manufacturing of a solid, particulate, fertilizer composition according to the method as described herein, characterized in that the system comprises additive introduction means in the effluent gas treatment unit and/or the scrubber solution storage container. More in particular, the additive introduction means are configured to introduce the additive into the scrubber solution, more in particular the first scrubber solution.

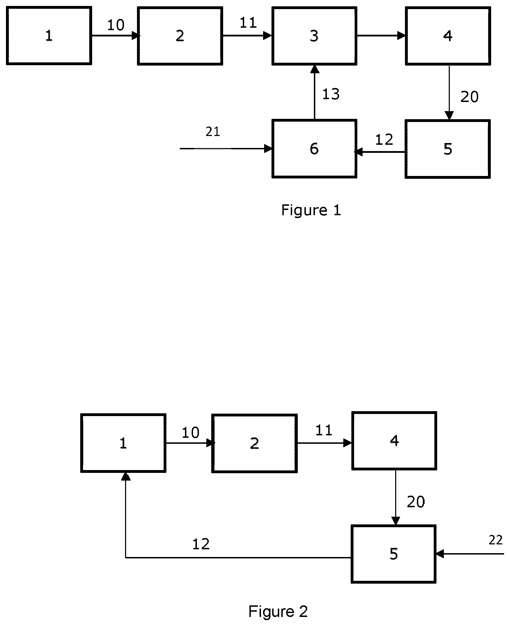

An embodiment of the method according to the present disclosure is disclosed in figure 1. The box **1** represents the synthesis unit, wherein an aqueous composition **10** comprising urea or an ammonium salt, and water is prepared. The aqueous composition **10** comprising urea or an ammonium salt, for example ammonium nitrate, is directed to the evaporator unit **2.** The water content in the fertilizer composition **10** is brought down to a range of from 0.5 weight% to about 5.0 weight% to provide a fertilizer **11.** The melt **11** is directed to a mixing unit **3** where the solution **13** from the scrubber solution storage container **6** is added to the melt and mixed until homogeneous. The melt is then directed to the particulation unit **4,** for example a fluidized bed granulator, wherein the melt **11** is transformed into a solid, fertilizer composition. The particulation unit **4** produces a stream of polluted air **20** comprising ammonia gas that is directed to an effluent gas treatment unit **5** comprising a scrubber. The effluent gas treatment unit **5** produces a first scrubber solution **12** comprising an ammonium salt, for example ammonium nitrate, that is directed to the scrubber solution storage **6.** The additive **21,** a micronutrient and/or a biostimulant, is added to the first scrubber solution **12** in the scrubber solution storage **6** to provide a second scrubber solution **13** comprising an ammonium salt, a micronutrient and/or a biostimulant.

An embodiment of the method according to the present disclosure is disclosed in figure 2. The box **1** represents the synthesis unit, wherein an aqueous composition **10** comprising urea or an ammonium salt, and water is prepared. The aqueous composition **10** comprising urea or an ammonium salt, for example ammonium nitrate, is directed to the evaporator unit **2.** The water content in the fertilizer composition **10** is brought down to a range of from 0.5 weight% to about 5.0 weight% to provide a fertilizer **11.** The melt **11** is directed to the particulation unit **4,** for example a pugmill, wherein the melt **11** is transformed into a solid, fertilizer composition. The particulation unit **4** produces a stream of polluted air **20** comprising ammonia gas that is directed to an effluent gas treatment unit **5** comprising a scrubber. The effluent gas treatment unit **5** is provided with an acidic aqueous solution 22 comprising a micronutrient and/or a biostimulant, and produces a scrubber solution **13** comprising an ammonium salt, for example ammonium nitrate, and a micronutrient and/or a biostimulant, that is directed to the synthesis section **1,** wherein the solution **13** is injected in the process, and is comprised in the aqueous solution **10** produced by the synthesis unit **1.**

## Claims

1. A method for the manufacture of a solid, particulate, fertilizer composition comprising a nitrogen source selected from the group consisting of urea, and ammonium salts, and an additive selected from the group consisting of biostimulants and micronutrients, in a production plant comprising at least a synthesis unit, an evaporator unit, a particulation unit, an effluent gas treatment unit comprising a scrubber, and optionally a scrubber evaporator, wherein the method comprises at least the steps of :
(i) in the synthesis unit, producing an aqueous solution comprising a nitrogen source selected from the group consisting of urea, and ammonium salts, and water;
(ii) in the evaporator unit, concentrating the aqueous solution produced in step (i), thereby obtaining a fertilizer melt comprising from 1.0 to 5.0 weight% of water;
(iii) in the particulation unit, particulating the melt obtained in step (ii), thereby obtaining a solid, particulate, fertilizer composition, and producing an effluent gas comprising ammonia gas;
(iv) in the effluent gas treatment unit, treating the effluent gas from the particulation unit comprising ammonia gas with an aqueous solution, thereby producing a scrubber solution; and
(v) optionally, in the scrubber evaporator, concentrating the scrubber solution from the scrubber solution storage container,
(vi) optionally, in the scrubber solution storage container, storing the scrubber solution from the effluent gas treatment unit produced in step (iii) or the concentrated scrubber solution from the scrubber evaporator;
(vii) mixing the scrubber solution obtained in step (iv) or (v) with the aqueous solution in the synthesis unit in step (i), with the aqueous solution in the evaporator unit in step (ii), or with the fertilizer melt obtained in step (ii);
**characterized in that** the additive is introduced as an aqueous suspension, an aqueous dispersion, a solution, or a solid, in any one or more of:
(a) the effluent gas treatment unit;
(b) the scrubber solution storage container containing the scrubber solution.

2. The method according to claim 1, wherein the additive comprises a biostimulant selected from the group consisting of seaweed extracts, plant extracts, enzymatic extracts, humic acids, fulvic acids, phosphites, chitosan, plant growth hormones, microbes, and protein hydrolysates.

3. The method according to claim 1 or 2, wherein the particulation unit comprises a particulation device selected from the group of fluidized bed granulator, pan granulator, drum granulator, prilling tower, spherodizer, pugmill, spray dryer, high intensity mixer, and pastillizer.

4. The method according to any one of claims 1 to 3, wherein the solid, particulate, fertilizer composition obtained in step (iii) comprises from 0.0001 to 2.0 weight%, in particular from 0.01 to 1.0 weight%, more in particular from 0.05 to 0.5 weight% of the additive relative to the total weight of the solid, particulate, fertilizer composition.

5. The method according to any one of claims 1 to 4, wherein the additive comprises a seaweed extract, the seaweed being a species selected from the group consisting of *Kappaphycus alvarezii, Ascophyllum Nodosum, Ecklonia maxima, Durvillea potatorum, Macrocystis pyrifera, Sargassum, Laminaria digitata* and mixtures thereof.

6. The method according to any one of claims 1 to 5, wherein the solid, particulate, fertilizer composition obtained in step (iii) comprises from 40 to 80 weight% of an ammonium salt selected from the group consisting of ammonium nitrate, ammonium sulphate, ammonium phosphate, and mixtures thereof.

7. The method according to any one of claims 1 to 6, wherein the solid, particulate, fertilizer composition obtained in step (iii) comprises from 40 to 99 weight% of urea.

8. The method according to any one of claims 1 to 7, wherein the solid, particulate, fertilizer composition obtained in step (iii) comprises one or more compounds selected from the group consisting of calcium nitrate, sodium nitrate, calcium bis(dihydrogen-orthophosphate), super phosphate, triple superphosphate, rock phosphate, potassium sulphate, potassium magnesium sulphate, urea, potassium chloride (MOP), potassium phosphate (SOP), urea potassium salts (UK), elemental sulphur, and mixtures thereof.

9. The method according to any one of claims 1 to 8, wherein the additive comprise a micronutrient selected from the group consisting of boron, copper, iron, molybdenum, manganese, zinc and mixtures thereof.

10. A system configured for the manufacture of a solid, particulate, fertilizer composition according to the method of any one of claims 1 to 9, **characterized in that** the system comprises additive introduction means in the effluent gas treatment unit and/or the scrubber solution storage container.
